# EUROPÄISCHE PATENTSCHRIFT

(11) **EP 3 033 219 B1**
(45) Veröffentlichungstag und Bekanntmachung des Hinweises auf die Patenterteilung: **01.12.2021**
(21) Anmeldenummer: 14742513.6
(22) Anmeldetag: 24.07.2014
(51) Int. Cl.: B29C 70/48, B29C 70/54, B29C 31/00, B29C 31/08, B29C 33/00

(54) **BAUTEIL AUS FASERVERSTÄRKTEM KUNSTSTOFF**
COMPONENT MADE OF FIBRE-REINFORCED PLASTIC
PIÈCE EN PLASTIQUE RENFORCÉ PAR DES FIBRES

(30) Priorität: 13.08.2013 DE 102013216032
(43) Veröffentlichungstag der Anmeldung: 22.06.2016
(73) Patentinhaber: Bayerische Motoren Werke Aktiengesellschaft, 80809 München (DE)
(72) Erfinder: PASSREITER, Thomas, 94333 Geiselhöring (DE); SCHNAUFER, Thomas, 82386 Oberhausen (DE); BEIL, Andreas, 80935 München (DE); WOLF, Christian, 80634 München (DE)
(86) Internationale Anmeldenummer: PCT/EP2014/065865
(87) Internationale Veröffentlichungsnummer: WO 2015/022160

(56) Entgegenhaltungen:
- EP-A1- 1 000 887
- EP-A1- 1 236 665
- DE-A1- 3 033 494
- DE-A1- 10 101 271
- DE-A1-102006 040 748
- DE-B- 1 044 196
- DE-T2- 69 222 130
- DE-T5-112011 101 876
- US-A1- 2002 018 709
- US-A1- 2003 129 377
- US-B1- 6 759 002

## Beschreibung

Die vorliegende Erfindung betrifft ein Fahrzeugstrukturbauteil aus faserverstärktem Kunststoff mit einer Matrix aus duroplastischem oder thermoplastischem Material, in der Verstärkungsfasern angeordnet sind.

Die Rohkarosserien heutiger Fahrzeuge werden aus metallischen Blechen zusammengesetzt, wobei gemäß dem Stand der Technik bevorzugt Bleche aus Stahl verwendet werden. Um jedoch das Gesamtgewicht eines Fahrzeuges zu reduzieren und damit ökologische Gesichtspunkte wie Fahrzeugverbrauch und Recyclingfähigkeit zu verbessern, wurde in letzter Zeit Aluminium als Werkstoff für solche Bleche eingesetzt. Unabhängig aus welchem Material diese Bleche sind, werden daraus Strukturteile hergestellt. Dabei wird zunächst ein Blech mit Hilfe eines Presswerkzeugs umgeformt. Beim Pressen oder im Anschluss an den Pressvorgang werden Durchgangslöcher in das Bauteil gestanzt oder geformt. Mit Hilfe dieser Durchgangslöcher kann bspw. ein Montageroboter das Bauteil aufnehmen und es an einem vorbestimmten Ort in einer vorbestimmten Position ausrichten. Hierzu weisen die Roboter Greifeinrichtungen auf, die in die Durchgangslöcher eingreifen können. Zusätzlich zu den Durchgangslöchern weisen die Blechbauteile Ausrichtungpunkte auf, mit denen sie an einem anderen Blechbauteil ausgerichtet werden können, damit beide Blechbauteile in einer vorbestimmten Position zueinander, miteinander verbunden werden können. Um eine kleine Toleranzkette zu realisieren, werden die Ausrichtpunkte und die Durchgangslöcher mit demselben Werkzeug erstellt. Vorzugsweise werden die Ausrichtpunkte und die Durchgangslöcher in dem formgebenden Presswerkzeug erstellt. Nach dem Fügen der beiden Blechbauteile müssen die Durchgangslöcher mit einem Stopfen oder ähnlichem abgedichtet werden.

Obige Fügeschritte finden auch bei der Herstellung von Karosserien aus faserverstärktem Kunststoff Anwendung. Hier werden die Durchgangslöcher, zur Aufnahme des Bauteils durch einen Roboter, jedoch in einem zweiten Bearbeitungsschritt nach der Formgebung eingebracht. Durch dieses nachgeschaltete Einbringen der Ausrichtlöcher in einem separaten Werkzeug entsteht bei Karosserien aus faserverstärktem Kunststoff eine größere Toleranzkette. Zusätzlich werden die lasttragenden Fasern durchtrennt, wodurch eine Schwächung im Bauteil entsteht. Dabei muss präzise darauf geachtet werden, dass eine vorbestimmte Positionierung der Durchgangslöcher zu den Ausrichtpunkten gewahrt bleibt. Nur dadurch kann gewährleistet werden, dass zwei zu fügende Bauteile korrekt zueinander ausgerichtet werden und die dabei entstehende Bauteilgruppe innerhalb der Toleranzwerte liegt. Durch das nachträgliche Verschließen der Durchgangslöcher erhöht sich bei der Karosseriefertigung der Montageaufwand, unabhängig davon, ob eine faserverstärkte Kunststoffkarosserie oder eine Blech-Schalen-Karosserie erzeugt wird.

Aus der US 6,759,002 B1 ist ein Verfahren zur Herstellung eines Verbundbauteils bekannt, bei dem ein Hybridwerkzeug verwendet wird, das zum einen als Form dient, auf die die Materialbestandteile aufgebracht werden können, die dann das Verbundbauteil ausbilden, und zum anderen als Fixierung für das Verbundmaterial dient, während einer Bearbeitung.

Aus der US 2003/0129377 A1 ist ein geformter Gegenstand mit einer gekrümmten Oberfläche aus einem hitzehärtbaren duroplastischen Polymerharz bekannt, in den eine Verstärkungseinlage integriert ist.

Die EP 1 236 665 A1 zeigt ein Verfahren zum Handhaben und Stapeln einer Vielzahl thermogeformter Container oder Deckel.

Aus der DE 11 2011 101 876 T5 ist ein Bauteil bekannt, das aufgebaut ist aus einem röhrenförmigen Skelettbauteil, das ausgebildet ist durch ein für ein Strukturmaterial eingesetztes Reaktionsspritzgießen eines thermoplastischen Harzes, das durch eine kontinuierliche Faser verstärkt ist, und das eine erhöhte Festigkeit aufweist, und aus Strukturen mit Ausbuchtungen und Vertiefungen, welche die beiden Endöffnungen des röhrenförmigen Skelettbauteils bedecken und welche hergestellt sind aus einem thermoplastischen Harz aus derselben Familie wie das zuvor genannte thermoplastische Harz und das in hohem Maße damit kompatibel ist. In dem Herstellungsverfahren für das Bauteil wird bevor das in dem für ein Strukturmaterial eingesetzte Reaktionsspritzgießen verwendete thermoplastische Harz die Polymerisation abgeschlossen hat, das thermoplastische Harz in einen Formenhohlraum, der das röhrenförmige Skelettbauteil umgibt, eingespritzt, so dass das Bauteil mit einer hohen Festigkeit und auf effiziente Weise hergestellt wird.

Die DE 692 22 130 T2 offenbart ein Fahrzeugstrukturbauteil gemäß dem Oberbegriff des unabhängigen Anspruchs 1.

Ausgehend von diesem Stand der Technik macht es sich die vorliegende Erfindung zur Aufgabe, ein Bauteil anzugeben, mit dem die Nachteile des Standes der Technik überwunden werden.

Diese Aufgabe wird durch ein Bauteil mit den Merkmalen des unabhängigen Anspruchs 1 gelöst.

Die abhängigen Ansprüche stellen vorteilhafte Ausführungsformen der Erfindung dar.

Darüber hinaus kann die Vertiefung als Aufnahme, zum Aufnehmen des Bauteils fungieren. Hieraus ergibt sich der Vorteil, dass die Bauteilaufnahme nicht als Durchgangsloch, sondern als Vertiefung ausgebildet ist und nach dem Fügen nicht mehr durch einen Blindstopfen verschlossen werden muss. Weiterhin fungiert der Vorsprung als Ausrichtelement, zum Ausrichten des Bauteils an einem anderen Bauteil.

In einer weiteren alternativen Ausführungsform kann der Vorsprung und/oder die Vertiefung integral im Bauteil ausgebildet sein. Dies bietet den Vorteil, dass bei der Herstellung des Bauteils die Bauteilaufnahme wie auch das Ausrichtelement einstückig mit dem Bauteil ausgebildet werden können. In einer bevorzugten Ausführungsform der Erfindung ist die Vertiefung oder, erfindungsgemäss, der als Ausrichtelement fungierende Vorsprung, in Reinharz ausgebildet. Das heißt bei Herstellung des Bauteils, wird eine mit Harz vorgetränkte Fasermatte in einem Werkzeug umgeformt und dabei das Harz ausgehärtet bzw. erstarrt. In dieser Form kann eine werkzeugfallende Karosseriebauaufnahme als Durchzug realisiert werden. Erfindungsgemäß werden auch die Vorsprünge werkzeugfallend in Reinharz ausgebildet, um zur Ausrichtung der Bauteile genutzt zu werden.

Weiter kann die Vertiefung hohl, insbesondere als Sackloch ausgebildet sein.

Erfindungsgemäß befindet sich der Vorsprung auf einer ersten Seite des Bauteils und die Vertiefung auf einer zweiten Seite des Bauteils, die der ersten Seite gegenüberliegend angeordnet ist, wobei sich die Vertiefung von der zweiten Seite her in den Vorsprung hinein erstreckt. Diese Ausführungsform hat den Vorteil, dass eine Integration der Bauteilaufnahme in das Ausrichtelement realisiert werden kann. Dadurch kann auch die Komplexität der Werkzeuge zur Herstellung des Bauteils reduziert werden.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachtet, um weitere Ausführungsformen zu bilden, die an entsprechende Anwendungen der Erfindung angepasst sind.

Es zeigen in schematischer Darstellung:
- Fig. 1a eine Seitenansicht auf einen Seitenrahmen eines viertürigen Kraftfahrzeugs gemäß des Standes der Technik,
- Fig. 1b eine Schnittansicht durch den in Fig. 1a gezeigten Seitenrahmen entlang der Schnittlinie A-A,
- Fig. 2a eine Seitenansicht auf einen Seitenrahmen gemäß der vorliegenden Erfindung,
- Fig. 2b verschiedene Ausprägungen von Vorsprüngen 11 in einer Detailansicht entsprechend dem Detail C aus Fig. 2a,
- Fig. 2c eine Vertiefung 12, als Schnittansicht entlang der Linie B-B aus Fig. 2a,
- Fig. 2d einen Vorsprung 11,
- Fig. 3 zwei Bauteile 10, die über ein Ausrichtelement 11 zueinander ausgerichtet sind und
- Fig. 4 eine Auswahl alternativ geformter Vorsprünge 11.

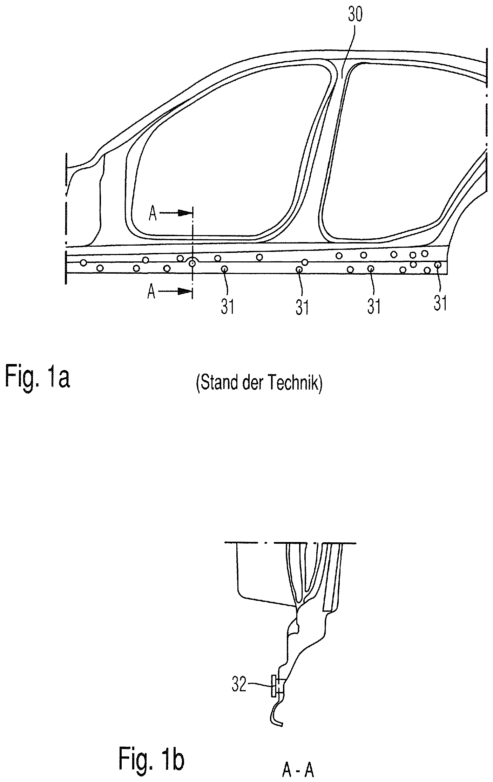

In Fig. 1a ist ein Seitenrahmen eines Kraftfahrzeugs gemäß dem Stand der Technik gezeigt. Dieser Seitenrahmen ist aus Blech ausgebildet und weist eine Vielzahl von Durchgangslöchern 31 auf, die zur Aufnahme des Seitenrahmens geeignet sind. Nach dem Fügen des Seitenrahmens 30 mit einem weiteren Fahrzeugbauteil, bspw. einem Unterboden (nicht gezeigt), müssen die Durchgangsbohrungen 31 mit Hilfe von Montagestopfen 32 wieder verschlossen werden. Ein solcher Montagestopfen 32 ist in Fig. 1b dargestellt. Diese Figur zeigt eine Schnittansicht entlang der Schnittlinie A-A aus Fig. 1.

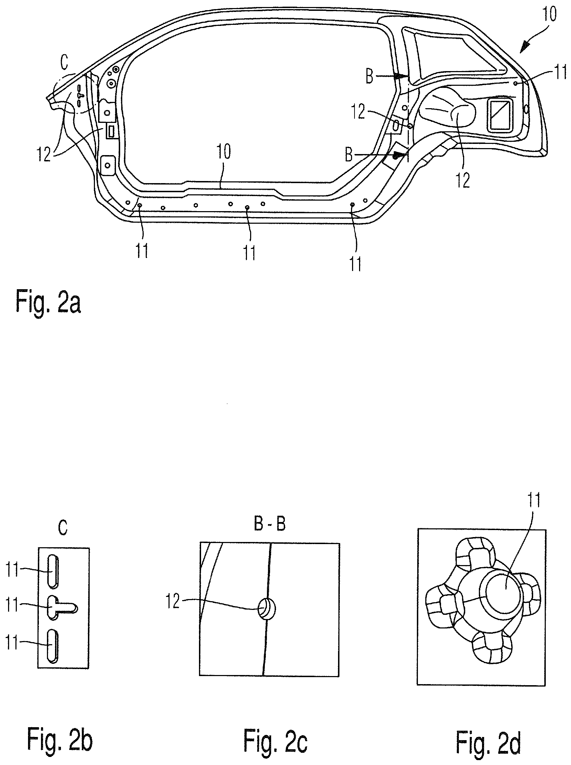

Fig. 2a zeigt eine Seitenansicht auf ein Bauteil 10 gemäß der vorliegenden Erfindung. Dieses Bauteil ist als ein Seitenrahmen ausgebildet. Im Sinne dieser Erfindung sind Bauteile Fahrzeugstrukturbauteile wie bspw. Seitengerippe, Dachspriegel, Seitenrahmen, Unterbodenverkleidungen, Dachelemente usw. Das Bauteil 10 umfasst mehrere Vorsprünge 11, die als Ausrichtungselement dienen. Über diese Vorsprünge 11 kann der Seitenrahmen 10 bspw. an einem nicht dargestellten Seitenschweller ausgerichtet werden. Zur Fixierung des Schwellers an den Seitenrahmen kommen die bekannten Fügeverfahren, bspw. Kleben oder Schweißen zum Einsatz. Im oberen Bereich der A-Säule ist ein Detail C abgebildet. Die Vergrößerung dieses Details C ist in Fig. 2b gezeigt. Die dort dargestellten Vorsprünge 11 sind Erhebungen bzw. Vorsprünge, die sich aus der Oberfläche des Bauteils 10 im Wesentlichen senkrecht zur Oberfläche erstrecken. Wie in Fig. 2 b gezeigt, können diese Vorsprünge 11 eine längliche, quaderförmige äußere Gestalt aufweisen oder auch in einer T-Form ausgebildet sein.

In Fig. 2a ist weiterhin eine Schnittlinie B-B dargestellt, deren dazugehörige Schnittansicht in Fig. 2c abgebildet ist. Daraus ist eine Vertiefung 12 in der Oberfläche des Bauteiles 10 erkennbar. In diese Vertiefung 12 kann eine Greifeinrichtung eines Handling-Roboters eingreifen, um dadurch das Bauteil bzw. das Bauteil 10 aufzunehmen, zu positionieren und an einem weiteren Bauteil auszurichten.

Alternativ zu den in Fig. 2b dargestellten Vorsprüngen 11 ist ein weiterer Vorsprung 11 in Fig. 2d dargestellt.

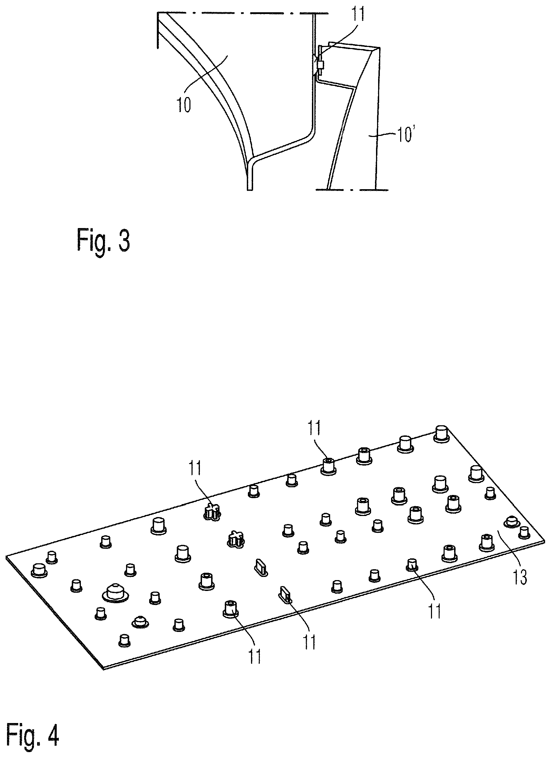

In Fig. 3 ist eine Baugruppe dargestellt, in der zwei Bauteile 10, 10' zueinander ausgerichtet sind. Als Ausrichthilfe dient das Ausrichtelement 11. Wie daraus erkennbar ist, ist das Ausrichtelement 11 als Vorsprung an dem in Fig. 3 linken Bauteil 10 ausgebildet. Dieser Vorsprung 11 greift in eine Ausnehmung des zweiten Bauteils 10', in Fig. 3 rechts dargestellt, ein. Der Einfachheit halber ist in Fig. 3 nur ein Ausrichtelement 11 dargestellt. Durch vorsehen mehrerer Ausrichtelemente 11, kann jedoch das Bauteil 10 an dem Bauteil 10' in einer vorbestimmten Position ausgerichtet werden.

Die Vorsprünge 11 wie auch die Vertiefungen 12 sind in Reinharzgeometrie ausgebildet. Das heißt, im Bereich der Vorsprünge 11 bzw. der Vertiefungen 12 weist das Bauteil 10 nur Matrixmaterial auf, das nicht mit Fasern verstärkt ist. Da die Fasern nicht durch die Vorsprünge 11 bzw. die Vertiefungen 12 verlaufen, bietet dies den Vorteil, dass die Elemente 11, 12 in einer Vielzahl von Geometrieen designt werden können, ohne Rücksicht nehmen zu müssen auf Faserverläufe und dergleichen. Der Gestaltungsfreiraum wird dadurch wesentlich erhöht. In diesem Fall sind jedoch fasergerechte Konstruktionsrandbedingungen zu beachten.

Fig. 4 zeigt eine Platte 13, auf der eine Vielzahl von Erhebungen 11 abgebildet sind, zur Verdeutlichung, dass diese Erhebungen bzw. Vorsprünge 11 in unterschiedlichen Geometrien ausgebildet werden können. Diese reichen von prismenförmigen bzw. zylindrischen Vorsprüngen 11, über kegelstumpfartige Vorsprünge 11, deren Seitenneigung unterschiedliche Winkel einnehmen kann, bis hin zu halbkugelförmigen Vorsprüngen. Darüber hinaus sind auch längliche Vorsprünge 11 realisierbar, die von ihrer Basis auf der Platte 13 zu ihrer Spitze, d.h. dem von der Basis am weitesten entfernten Punkt, spitz zulaufen. Solche Vorsprünge können auch gekreuzt angeordnet werden, so dass sich die kreuzförmigen Geometrien ergeben wie in Fig. 4 dargestellt.

Kern der Erfindung ist es, Vorsprünge 11 und Vertiefungen 12 in einem Bauteil 10 auszubilden. Dieses Bauteil kann im Sinne der Erfindung zur Herstellung von Fahrzeugstrukturteil weiterverarbeitet werden, beispielsweise durch Endkonturbeschnitt nach der Erstellung des Bauteils.

Die Vorsprünge 11 bzw. Vertiefungen 12 werden dabei als Reinharzgeometrie erzeugt. Dies bedeutet, dass bei der Herstellung des Bauteils darauf geachtet wird, dass in den Bereichen, in denen die Vorsprünge 11 oder die Vertiefungen 12 vorgesehen werden, keine Fasern angeordnet sind. Derartige Bauteile werden im Allgemeinen im Resin-Transfer-Molding-Verfahren (RTM) hergestellt. In diesem Verfahren wird eine trockene Fasermatte in ein RTM-Werkzeug eingelegt und anschließend mit Harz infiltriert. Durch Vorsehen eines Dorns bzw. einer Vertiefung in dem RTM-Werkzeug als Negativ kann ein entsprechendes Positiv in dem Bauteil generiert werden, wobei nur Harz in diese Aussparung der Kavität des RTM-Werkzeuges gelangt, ohne dass Fasern mit eingebracht werden.

Alternativ zum RTM-Verfahren, können faserverstärkte Bauteile im sogenanntes Nasspressverfahren hergestellt werden. In diesem Verfahren wird ein vorimprägniertes Rohteil, bspw. eine vorimprägnierte Fasermatte, ein sogenanntes Prepreg in ein Presswerkzeug eingelegt. Anschließend wird mit dem Presswerkzeug umgeformt und mit Druck und/oder Temperatur beaufschlagt, damit die Matrix aushärtet. Im Gegenverfahren müssen in dem Umformwerkzeug ebenfalls Vertiefungen oder Vorsprünge vorgesehen sein. Diese Vorsprünge verdrängen die Fasern in der Matte und formen nur das Harz um. Dadurch kann beim Aushärten in diesem Bereich eine Reinharzgeometrie erzeugt werden.

Durch die vorliegende Erfindung kann im Verbauprozess der Karosserie, d.h. beim Fügen der einzelnen Karosseriekomponenten zu einer Rohkarosse, die Genauigkeit erhöht werden, weil eine kleinere Toleranzkette generiert wird. Dadurch kann der Aufwand an Nacharbeit reduziert werden. Der Bearbeitungsaufwand für faserverstärkte Kunststoffbauteile wird ebenfalls reduziert. Nicht zuletzt entfällt der Abdichtprozess, in dem Stopfen oder Ähnliches in Durchgangslöcher eingebracht werden.

## Patentansprüche

1. Fahrzeugstrukturbauteil(10) aus faserverstärktem Kunststoff mit:
- einer Matrix aus duroplastischem oder thermoplastischem Material
- Verstärkungsfasern, die in der Matrix angeordnet sind,
**dadurch gekennzeichnet, dass**
mindestens ein lokaler Vorsprung (11) aus reinem Matrixmaterial vorgesehen ist, wobei in dem Vorsprung (11) keine Verstärkungsfasern angeordnet sind und wobei der Vorsprung (11) als Ausrichtelement zum Ausrichten des Fahrzeugstrukturbauteils (10) an einem anderen Fahrzeugstrukturbauteil (10') fungiert, wobei der Vorsprung (11) sich auf einer ersten Seite des Bauteils (10) befindet, und eine Vertiefung (12) sich auf einer zweiten Seite des Fahrzeugstrukturbauteils (10) befindet, die der ersten Seite gegenüberliegend angeordnet ist, wobei sich die Vertiefung (12) von der zweiten Seite her in den Vorsprung (11) erstreckt.

2. Fahrzeugstrukturbauteil (10) nach Anspruch 1, **dadurch gekennzeichnet, dass**
die Vertiefung (12) aus reinem Matrixmaterial ist, wobei in dem Bereich, in dem die Vertiefung (12) vorgesehen ist, keine Verstärkungsfasern angeordnet sind.

3. Fahrzeugstrukturbauteil (10) nach Anspruch 2, **dadurch gekennzeichnet, dass**
die Vertiefung (12) als Aufnahme zum Aufnehmen des Fahrzeugstrukturbauteils (10), fungiert.

4. Fahrzeugstrukturbauteil (10) nach einem der vorhergehenden Ansprüche 2 oder 3, **dadurch gekennzeichnet, dass**
der Vorsprung (11) und/oder die Vertiefung (12) integral im Fahrzeugstrukturbauteil (10) ausgebildet ist.

5. Fahrzeugstrukturbauteil (10) nach einem der vorhergehenden Ansprüche 1,2 oder 4, **dadurch gekennzeichnet, dass** die Vertiefung (12) hohl, als Sackloch ausgebildet ist.

## Claims

1. Vehicle structural component (10) composed of fibre-reinforced plastic, comprising:
- a matrix composed of thermosetting or thermoplastic material,
- reinforcing fibres which are arranged in the matrix,
**characterized in that**
at least one local projection (11) composed of pure matrix material is provided, wherein no reinforcing fibres are arranged in the projection (11) and wherein the projection (11) functions as an orienting element for orienting the vehicle structural component (10) on another vehicle structural component (10'), wherein the projection (11) is located on a first side of the component (10), and an indentation (12) is located on a second side of the vehicle structural component (10), said second side being arranged so as to lie opposite the first side, wherein the indentation (12) extends from the second side into the projection (11).

2. Vehicle structural component (10) according to Claim 1, **characterized in that**
the indentation (12) is composed of pure matrix material, wherein no reinforcing fibres are arranged in the region in which the indentation (12) is provided.

3. Vehicle structural component (10) according to Claim 2, **characterized in that**
the indentation (12) functions as a receptacle for receiving the vehicle structural component (10).

4. Vehicle structural component (10) according to either of preceding Claims 2 and 3, **characterized in that**
the projection (11) and/or the indentation (12) are/is formed integrally in the vehicle structural component (10).

5. Vehicle structural component (10) according to one of preceding Claims 1, 2 or 4, **characterized in that** the indentation (12) is configured to be hollow, in the form of a blind hole.

## Revendications

1. Composant structural de véhicule (10) en matière plastique renforcée par des fibres, comprenant :
- une matrice en matériau thermodurcissable ou thermoplastique,
- des fibres de renforcement, qui sont agencées dans la matrice,
**caractérisé en ce que**
au moins une protubérance locale (11) en matériau de matrice pur est prévue, aucune fibre de forcement n'étant agencée dans la protubérance (11) et la protubérance (11) servant d'élément d'alignement pour l'alignement du composant structural de véhicule (10) sur un autre composant structural de véhicule (10'),
la protubérance (11) se trouvant sur un premier côté du composant (10), et une dépression (12) se trouvant sur un deuxième côté du composant structural de véhicule (10), qui est agencé à l'opposé du premier côté, la dépression (12) s'étendant à partir du deuxième côté dans la protubérance (11).

2. Composant structural de véhicule (10) selon la revendication 1, **caractérisé en ce que** la dépression (12) est en matériau de matrice pur, aucune fibre de renforcement n'étant agencée dans la zone dans laquelle la dépression (12) est prévue.

3. Composant structural de véhicule (10) selon la revendication 2, **caractérisé en ce que** la dépression (12) sert de logement pour la réception du composant structural de véhicule (10).

4. Composant structural de véhicule (10) selon l'une quelconque des revendications 2 ou 3 précédentes, **caractérisé en ce que** la protubérance (11) et/ou la dépression (12) est configurée d'un seul tenant dans le composant structural de véhicule (10).

5. Composant structural de véhicule (10) selon l'une quelconque des revendications 1, 2 ou 4 précédentes, **caractérisé en ce que** la dépression (12) est configurée sous forme creuse, en tant que trou borgne.
